# EUROPEAN PATENT SPECIFICATION

(11) **EP 0 430 266 B1**
(45) Date of publication and mention of the grant of the patent: **21.06.1995**
(21) Application number: 90122898.1
(22) Date of filing: 29.11.1990
(51) Int. Cl.: C08G 18/08, C08G 18/50, C09D 175/04

(54) **Water-dilutable fluorinated polyurethanes, process for preparing them and their use for the treatment of lithoidal materials and plasters**
Wasserverdünnbare, fluorierte Polyurethane, Verfahren zu ihrer Herstellung und ihre Verwendung zur Behandlung lithoidaler Materialien und Gips
Polyuréthanes fluorinés diluables par l'eau, procédé pour leur préparation et leur utilisation pour le traitement des matériaux lithoidaux et plâtres

(30) Priority: 30.11.1989 IT 2254589
(43) Date of publication of application: 05.06.1991
(73) Proprietor: SYREMONT S.p.A., I-20121 Milan (IT)
(72) Inventor: Federici, Franco, I-21052 Busto Arsizio, Varese (IT); Cozzi, Ennio, I-20020 Cantalupo, Milan (IT); Parrini, Paolo, I-28100 Novara (IT)
(74) Representative: Weinhold, Peter, Dr.

(56) References cited:
- EP-A- 0 273 449
- EP-A- 0 294 829
- EP-A- 0 339 862

## Description

The present invention relates to water-dilutable fluorinated polyurethanes and to their use for the treatment of lithoidal materials.

More in particular, the present invention relates to water-dilutable fluorinated polyurethanes and to the use thereof in the preparation of protective compositions showing high resistance to light and impermeability to water.

Still more particularly, the present invention relates to water-dilutable fluorinated polyurethane compositions displaying a highly impermeabilizing action, i.e., a protective effect towards the aggressive action of moisture and water, as well as of the salts dissolved therein, the permeability of the treated materials for gases and vapours being maintained unchanged.

The compositions according to the present invention make it possible to achieve a protective effect, which is retained over extended periods of time even when the treated material is exposed to drastic environmental conditions of decay and ageing.

It is well-known that many materials tend to decay with time and to become, for example, extremely porous and incoherent, before getting completely destroyed, due to chemical attacks by the surrounding environment, or owing to also natural causes of decay and ageing. Typical examples of materials which undergo such a change are all kinds and types of stones, such as bricks, marbles, building materials, etc.

The problem of preserving these materials is of basic importance in those cases in which one wishes to preserve the object or built structure with its original appearance, and replacement thereof to a more or less integral extent is not desirable. This problem arises, e.g., in case of cultural, artistic, historical and archaeological goods, which are to be preserved for as long as possible.

It is well-known that the materials which are particularly subject to such intense decay are lithoidal monuments such as churches, palaces, built structures, etc. which, by being in continuous contact with the more or less polluted atmosphere of towns and/or the surrounding environment, are exposed to continuous attacks by chemical agents, such as sulfur oxides or nitrogen oxides which, in the presence of atmospheric humidity, exert an action which modifies to a substantial extent the nature of the materials they were built with. These chemical attacks, combined with the natural temperature variations, cause changes in colour and/or the formation of crusts, scales, thin strips, crevices, etc. The concerned materials, consequently, are subject to a progressive, continuous and inexorable loss of cohesion, portions of said materials getting lost every day.

In this case, the intervention aiming at preserving the object or built structure requires a preliminary cleaning and a subsequent protective treatment during which the operators try to protect the various constituting elements or parts, aiming at preventing aggressive agents from attacking the protected object or structure and its more significant portions, such as decorations, reliefs, etc.

For the purpose of achieving such a protection, it is known to coat or soak the concerned object, structure or material with polymeric film-forming substances, such as acrylic, vinylic, siliconic resins, etc., which substances show a good adhesive strength and impart a high resistance to atmospheric agents and a fairly good resistance to ageing caused by the action of light and other atmospheric agents.

The main drawback of these polymeric substances is that they form a film which, even if kept very thin, is not permeable to air, vapours and other gases. Such an impermeable coating causes vapours to accumulate inside the material, salts to concentrate and a whole range of processes to take place which may irreparably damage the treated material to an even more evident extent. In fact, it is known that the transpiration of a material, such as stone, brick, marble, etc. is of basic importance for its proper and long- lasting preservation.

According to EP-A-405534 it has been found that polyurethanes with hydroxy functionality whose chains contain perfluoroether units show the above characteristics and besides being colourless, having good adhesion properties and imparting optimum characteristics of resistance to light, moisture, water and atmospheric agents, do not substantially modify the permeability to gases and vapours and furthermore are not film-forming and reversible.

Unfortunately, it was observed that the application of such products to lithoidal materials with a high moisture content, such as certain stone materials immediately after rain, is difficult and usually ineffective since the hydrophobic nature of the products prevents a proper application thereof.

EP-A-273449 discloses aqueous dispersions of fluorinated polyurethanes obtained by the reaction of an organic diiscocyanate with a mixture of diols containing ionizable groups and macroglycols comprising polyols and at least 1% by weight of one or more hydroxy-and/or carboxy-capped fluoropolyethers. Said fluorinated polyurethanes are salified, to transform the ionizable groups into hydrophilic cations and/or anions, and are then dispersed in water to be used in textile coatings. The fluorine content of the polymers described in the examples of said document ranges from 4 to 4.5 % by weight.

The object of the instant invention is to provide a composition for protecting lithoidal materials which, besides being endowed with the characteristics described above, is also suitable for application onto substrates having a high moisture content.

Therefore, the subject-matter of the present invention are water-dilutable fluorinated polyurethanes which have a fluorine content higher than 30 % by weight and are obtainable by a process which comprises:
(i) reacting an excess of at least one organic diisocyanate with at least one hydroxy-capped (per)-fluoropolyether;
(ii) reacting the thus obtained product with at least one polyol having a hydroxy functionality higher than or equal to 2 and carrying at least one free carboxyl group; and
(iii) reacting the thus obtained prepolymer with at least one hydroxy compound having a functionality of at least 1 and being different from those used in steps (i) and (ii).

According to the present invention, the ratio of NCO equivalents to total OH equivalents [NCO/(total OH) equivalent ratio] is preferably lower than or equal to 1, and most preferably is comprised within the range of from 0.001 to 0.9.

Preferred examples of suitable diisocyanates have the general formula (I): 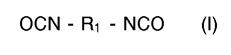 wherein
R₁ is selected from alkylene, cycloalkylene, alkylene-cycloalkylene and arylene radicals containing from 1 to 20 carbon atoms, e.g. from 6 to 14 carbon atoms. Said radicals may optionally contain one or more heteroatoms preferably selected from 0,S and N(H). Specific examples of diisocyanates which can be used are 2,4-toluene-diisocyanate, either alone or in mixture with the 2,6-toluene-diisocyanate isomer, 4,4'-diphenylmethane diisocyanate, 4,4'-dicyclohexyl-methane diisocyanate; 1-isocyanato-3-isocyanato-methyl-3,5,5-trimethylcyclohexane (or isophorone diisocyanate); 2,2,4-trimethyl hexamethylenediisocyanate in mixture with 2,4,4-trimethyl hexamethylene diisocyanate, ethylidene- diisocyanate, butylene-diisocyanate, pentamethylene-diisocyanate, hexamethylene-diisocyanate, cyclopentylene-1,3-diisocyanate, cyclohexylene-1,4-diisocyanate, cyclohexylene-1,2-diisocyanate, xylylene-diisocyanate, dichlorohexamethylene-diisocyanate, dicyclohexyl-4,4'-di-isocyanate, 1,2-di(isocyanatomethyl)-cyclobutane, 1-methyl-2,4-diisocyanato-cyclohexane and 1-methyl-2,6-diisocyanato-cyclohexane; aliphatic diisocyanates containing ether groups, such as 1,3-bis-(gamma-isocyanatopropoxy)-2,2-di-methylpropane.

Among these, the aliphatic diisocyanates, such as isophorone-diisocyanate, are preferred.

The hydroxy-capped (per)fluoropolyethers to be used in the preparation of the polyurethanes according to the present invention preferably have an average molecular weight of from 400 to 7000 and have the general formula (II): 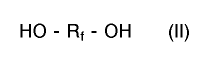 in which Rₜ is selected from
-R-CF₂-O-(C₂F₄O)ₘ(CF₂O)ₙ-CF₂-R-; 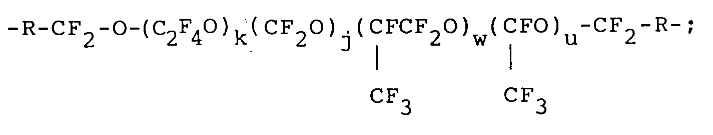
-R-CF₂-O-(Ca F₆ O)_{d}-CF₂-R-;
-R-CF₂-(OC₂F₄CH₂)_{b}-OR'_{f} O-(CH₂C₂F₄O)_{b}-CF₂-R-;
-R-CF₂-O- (C₂F₄O)ᵣ-CF₂-R-; 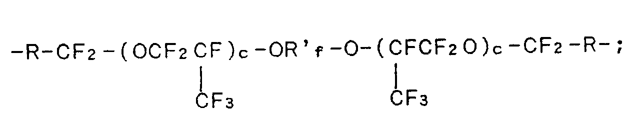 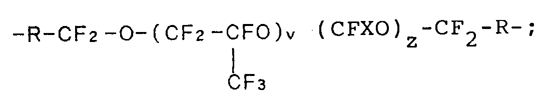 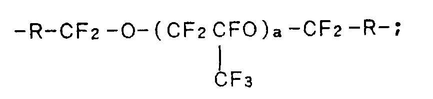 and 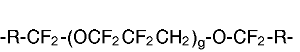 wherein:
   R is selected from
      -CH₂)ₓ₋, -(CH₂0)yCH₂- and -(CH₂)ₓOCH₂-, x and y being integers of from 1 to 4;
   m and n are integers, the ratio m/n ranging from 0.2 to 2, and preferably from 0.5 to 1.2;
   R'ₜ is a perfluoroalkylene radical preferably having 2 to 20 carbon atoms;
   X is F or CF₃;
   k, j, w, u, d, b, r, c, v, z, a, g are integers such that the average molecular weights of the corresponding products are within the range specified above.

The (per)fluoropolyethers of general formula (II) are known products and can be obtained, e.g., according to the processes disclosed in US-A-3,242,218; 3,665,041; 3,715,378 and 4,523,039 and in EP-A-148,482; 151,877; 165,649 and 165,650.

Said (per)fluoropolyethers are known on the market under, e.g., the trade-names FOMBLIN^{(R)} and GALDEN(^{R}), (Montefluos S.p.A., Milan).

In the preparation of the polyurethanes according to the present invention, the polyols used in step (ii) preferably contain at least one free carboxyl linked to a carbon atom which bears (preferably two) hydroxymethyl groups; examples of such compounds are dimethylol acetic acid, dimethylol propionic acid and dimethylol butyric acid.

Furthermore, also other compounds containing two hydroxy groups and one free carboxyl group such as, e.g., the semi-esters of anhydrides of dicarboxylic acids with triols, can be used to advantage.

Specific examples of such compounds are the semiesters of e.g. maleic anhydride, succinic anhydride and phthalic anhydride and e.g. trimethylol ethane, trimethylol propane and glycerol.

Any hydroxylated compound having a functionality of at least 1 and different from those employed in steps (i) and (ii) can be used in the synthesis of the polyurethanes according to the present invention. Preferred examples are the polyols having a molecular weight lower than 500, such as isopropanol, ethylene glycol, ethylene glycol monoacetate, propylene glycol, propylene glycol monoacetate, 1,4-butanediol, trimethylol propane, trimethylol ethane, glycerol, 1,2,6-hexanetriol, pentaerythritol, neopentylglycol and hydrogenated bisphenol A.

The water-dilutable fluorinated polyurethanes according to the present invention generally have an average molecular weight higher than 1000 and preferably of from 2000 to 10,000, a hydroxy functionality higher than or equal to 0 and preferably of from 2 to 6, a fluorine content of preferably from 35 to 50%, a content of free carboxyl groups of at least 1 % by weight, based on the dry weight of the products, and are soluble in many organic solvents such as, e.g., esters, ketones, glycol ethers, chlorofluoro carbons and, after salification of the ionizable group, also in water.

For the salification, salifying agents are preferably used which are selected from inorganic bases, such as sodium hydroxide or ammonium hydroxide, and tertiary amines or alkanolamines, such as triethylamine, dimethylethanolamine and triethanolamine.

High-molecular-weight polyols, e.g., with a molecular weight of from 500 to 6000, such as polyethylene glycol 1000, polyethylene glycol 2000, polypropylene glycol 1000, polypropylene glycol 2000, polytetramethylene glycol and polycaprolactone diol, and their corresponding derivatives monoesterified with aliphatic (C₁-C₄)-carboxylic acids can be used as well.

The process for preparing the water-dilutable, fluorinated polyurethanes according to the present invention comprises:
(a) reacting the diisocyanate and the hydroxy-capped (per)-fluoropolyether at a temperature of from 40 to 100°C, the ratio of NCO equivalents to OH equivalents (equivalent NCO/OH ratio) being adjusted to about 3;
(b) reacting the product from step (a) with the ionizable polyol having a functionality higher than or equal to 2 and at least one free carboxyl group at a temperature of from 40 to 120_{°}C, the equivalent ratio [NCO of (a)/OH] being adjusted to higher than or equal to 1.5, and preferably ranging from 2 to 3; and
(c) reacting the product from step (b) with a hydroxy compound having a functionality of at least 1 and being different from the hydroxy compounds employed in steps (a) and (b) at a temperature of from 50 _{°} C to 120°C, until the NCO groups have disappeared.

The reactions of steps (a), (b) and (c) are preferably carried out in a solvent which is inert at the reaction temperatures. Examples of suitable solvents are glycolether acetates, such as methyl-cellosolve acetate, methoxypropanolacetate and butoxyethanol-acetate esters, such as ethyl acetate and butyl acetate, and N-methylpyrrolidone.

In order to increase the reaction rate said reaction is advantageously carried out in the presence of suitable catalysts.

Examples of such catalysts are tertiary amines, such as triethylene diamine, N-ethyl-ethylene-imine, tetramethylguanidine and dimethyl-cyclohexylamine; organometallic activators, such as dibutyltin dilaurate, tin octanoate, cobalt naphthenate, vanadium acetylacetonate, dimethyltin diethylhexanoate and mixtures thereof.

Triethylene diamine and dibutyltin dilaurate are preferred catalysts.

Said catalysts are used in catalytic concentrations, generally not higher than 0.1 % by weight.

The water-dilutable fluorinated polyurethanes according to the present invention can be used as protective agents in the treatment of lithoidal materials, plasters and cements, to which they impart hydrophobic and enhanced cohesion characteristics. The products according to the present invention are preferably used in the form of solutions of high concentrations, e.g., of from 1 to 20% by weight, and preferably of from 1 to 5% by weight.

As solvents, water or mixtures of water with the solvents employed in the preparation process, or other water-compatible dilution solvents can be used. Examples of dilution solvents are alcohols, glycol ethers, ketones and mixtures thereof.

The following non-limitative examples are to illustrate the present invention.

### Example 1

66.69 g of isophorone diisocyanate (0.3 mol), 200 g of Fomblin^{(R)} Z-DOL 2000 (0.1 mol), 66.7 g of methoxypropanol acetate and 0.066 g of DABCO(^{R}) T12 CL (dibutyltin dilaurate) were charged, under a nitrogen atmosphere, to a 500 ml reactor equipped with stirrer, thermometer and reflux condenser. The reaction mixture was heated to 55 °C within 20 minutes and then up to approximately 80 °C within 15 minutes. The reaction mixture was kept at this temperature until an NCO content of not more than 5%, based on the dry weight, was reached (solids content = 80%). Thereafter the reaction mixture was cooled to 70 °C and 13.4 g of dimethylol propionic acid were added thereto. The resulting reaction mixture was heated to 100_{°}C within 30 minutes, and kept at this temperature until an NCO content of from 2.4 to 3.6, based on the total reaction mixture, was reached. Then the reaction mixture was cooled to 70 _{°} C and 21.84 g of neopentyl glycol were added thereto. The resulting reaction mixture was heated to 80 °C within 30 minutes and was kept at this temperature until NCO groups could no longer be detected (2.5 hours).

Finally, the reaction mass was cooled to 70°C and 10.1 g of triethylamine and 245.3 g of water were added thereto; thereby a final product having a solids content of 50% was obtained.

### Example 2

The process was carried out in the same way as described in example 1, until the second content of NCO groups was reached. The reaction mass was then cooled to 55°C and about 18.45 g of 1,4-butanediol (0.205 mol) were added. Then the temperature was increased up to about 100°C within 2.5 hours. The reaction mass was kept at this temperature until the NCO groups had totally disappeared (after about 1 hour). The composition then was diluted with water as described in example 1.

### Example 3

The process was carried out in the same way as described in example 1, the neopentyl glycol being replaced by 12.6 g of isopropanol.

The physico-chemical characteristics of the products obtained in examples 1 to 3 are reported in the following Table 1.

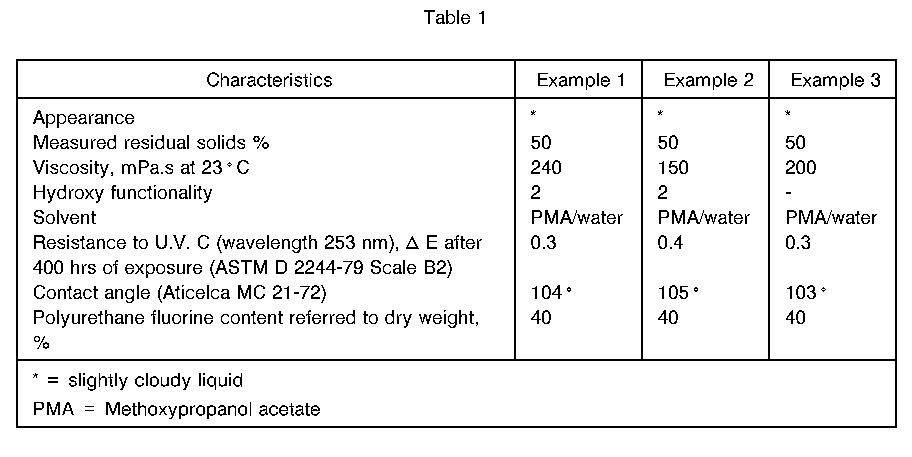

### Example 4

The product of example 1 was used for tests regarding the strengthening and hydrophobization of surfaces of an aged plaster composed of air-hardening lime and sand (ratio 2:1), which had been installed on the relevant wall at least 50 years before the test. Said plaster showed loosened portions and poorly coherent and highly moist surface regions.

The average water absorption was 14.5% by weight.

Surfaces of 0.15 x 0.6 m were treated with a solution of the product of example 1 salified with diluted ammonium hydroxide at 2.5% by weight in 3:1 water/ethyl alcohol.

The so prepared solution was applied by brush, so as to have 6 adjacent regions with regular boundaries, treated with an increasing number of layers.

The waterproofing effect was evaluated by comparing the drying speeds of the six treated regions, after having been treated with plenty of water.

After 5 minutes all of the regions treated with three or more layers were dry. After 15 minutes, all treated areas were dry, in contrast to the surrounding - not treated - areas, which were still wet even after 60 minutes.

The strengthening effect was verified by subjecting a surface element of about 100 cm² of surface area to 10 brush strokes with a hard-bristle brush, and collecting the removed material. The amount of material removed from the not treated surface region was about 2.5 g, while the material removed from the regions treated with 1 layer was 2.1 g, and the amount removed from the regions treated with at least 3 layers was less than 0.2 g.

The permeability to water vapour was measured according to ASTM E 96 and the following results were obtained:
11.6 g/hour.m² for non-treated plaster,
7 g/hour.m² for treated plaster.

### Example 5

The product of example 1, salified with an excess of triethanolamine (twice the stoichiometric amount) in solution at 5% in 3:1 water/ethanol was applied by brush along an edge of a reinforced concrete pillar installed approximately 20 years before the test and exposed to the action of driving rain in an industrial area.

The surface lacked the smooth external layer of cement, with the inert fillers exposed, and displayed friability.

The solution, prepared as disclosed above, was applied by brush, in a way such as to have eventually 6 adjacent regions with regular boundaries, treated with an increasing number of layers.

The hydrophobization was evaluated by determining the drying speed of the surface of the treated region, as compared to the drying speed of the surrounding, not treated region; both regions were sprinkled with plenty of water.

The regions with 5 or 6 deposited layers proved to be poorly wetted, and dried within less than 5 minutes. All of the other treated regions were dry within about 20 minutes, while the non-treated regions were still wet to a visible extent after about 70 minutes.

In the following Table the deposited amounts of product of example 1 in the various treated regions are reported. Furthermore, as values indicative of the reaggregating effect, the amounts of surface material are reported, wich could be removed by brushing from each treated region, expressed as percentage of the analogous amounts which could be removed from the adjacent, non-treated regions.

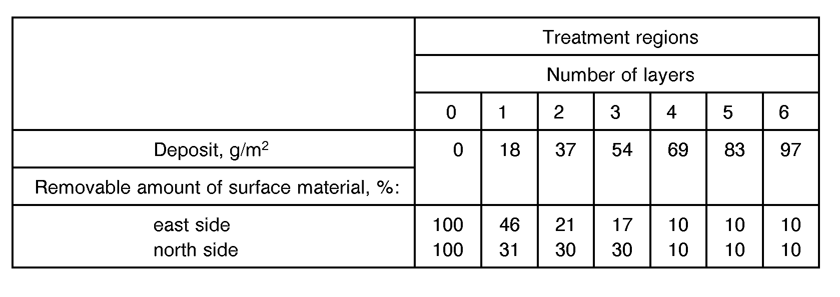

## Claims (Claims for the following Contracting State(s) : AT, BE, CH, DE, DK, FR, GB, GR, LI, NL, SE)

1. Water-dilutable fluorinated polyurethanes having a fluorine content higher than 30% by weight and obtainable by a process which comprises:
(i) reacting an excess of at least one organic diisocyanate with at least one hydroxy-capped (per)-fluoropolyether,
(ii) reacting the thus obtained product with at least one polyol having a hydroxy functionality of at least 2 and at least one free carboxyl group; and
(iii) reacting the thus obtained prepolymer with at least one hydroxy compound having a functionality of at least 1 and being different from those used in steps (i) and (ii).

2. Polyurethanes according to claim 1, wherein the ratio of the NCO equivalents to the total OH equivalents [NCO/(total OH) equivalent ratio] is not higher than 1, and preferably ranges from 0.001 to 0.9.

3. Polyurethanes according to any one of claims 1 and 2, wherein the diisocyanate is selected from those of general formula (I): 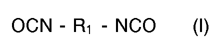 wherein
R₁ is selected from alkylene, cycloalkylene, alkylenecycloalkylene and arylene radicals containing from 1 to 20 carbon atoms.

4. Polyurethanes according to any one of the preceding claims, wherein the hydroxy-capped (per)-fluoropolyethers have an average molecular weight of from 400 to 7000 and have the general formula (II): 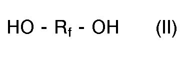 in which Rₜ is selected from
-R-CF₂-O-(C₂F₄O)ₘ(CF₂O)ₙ-CF₂-R-; 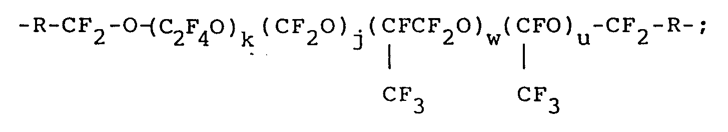
-R-CF₂-O(C₃ F₆ O)_{d}-CF₂-R-;
-R-CF₂-(OC₂F₄CH₂)_{b}-OR'_{f} O-(CH₂C₂F₄O)_{b}-CF₂-R-;
-R-CF₂-O- (C₂F₄O)r-CF₂-R-; 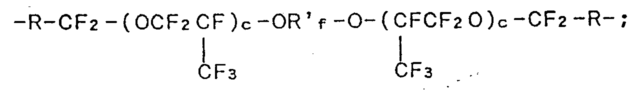 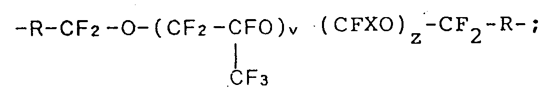 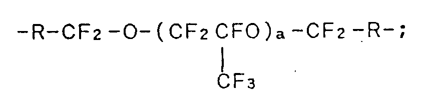 and 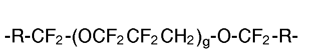 wherein:
R is selected from -CH₂)ₓ-, -(CH₂₀)yCH₂- and -(CH₂)ₓOCH₂-, x and y being integers of from 1 to 4;
m and n are integers, the ratio m/n being comprised within the range of from 0.2 to 2;
R'ₜ is a perfluoroalkylene radical;
X is F or CF₃;
k, j, w, u, d, b, r, c, v, z, a and g are integers such that the average molecular weights of the corresponding products are within the range specified above.

5. Polyurethanes according to any one of the preceding claims, wherein in the polyols which contain at least one free carboxyl group said group is bonded to a carbon atom which carries two hydroxymethyl groups.

6. Polyurethanes according to any one of the preceding claims, wherein the hydroxy compound having a functionality of at least 1 has a molecular weight of less than 500.

7. Polyurethanes according to any one of claims 1 to 5, wherein the hydroxy compound having a functionality of at least 1 has a molecular weight of from 500 to 6000.

8. Polyurethanes according to any one of the preceding claims, having an average molecular weight higher than 1000, a hydroxy functionality ranging from 2 to 6 and a content of free carboxyl groups of at least 1 % by weight, based on the dry substance weight, and being soluble in many organic solvents and, after salification of the carboxyl group(s), also in water.

9. Process for preparing the polyurethanes according to any one of the preceding claims, comprising:
(a) reacting the diisocyanate and the hydroxy-capped (per)fluoropolyether at a temperature of from 40 to 100°C, the equivalent ratio NCO/OH being adjusted to about 3;
(b) reacting the product from step (a) with the polyol having a functionality of at least 2 and at least one free carboxyl group at a temperature of from 40 to 120°C, with an equivalent ratio [NCO of (a)-/OH] of at least 1.5; and
(c) reacting the product from step (b) with a hydroxy compound having a functionality of at least 1 and being different from the hydroxy compounds employed in steps (a) and (b), at a temperature of from 50°C to 120°C, until the NCO groups have disappeared.

10. Use of the water-dilutable fluorinated polyurethanes according to any one of claims 1 to 8 as protecting agents in the treatment of lithoidal materials, plasters and cements, preferably in the form of a solution having a concentration of from 1 to 20% by weight.

## Claims (Claims for the following Contracting State(s) : ES)

1. Process for preparing water-dilutable fluorinated polyurethanes having a fluorine content higher than 30% by weight, comprising:
(a) reacting an excess of at least one organic diisocyanate with at least one hydroxy-capped (per)-fluoropolyether at a temperature of from 40 to 100_{°}C, the equivalent ratio NCO/OH being adjusted to about 3;
(b) reacting the product from step (a) with at least one polyol having a functionality of at least 2 and at least one free carboxyl group at a temperature of from 40 to 120°C, with an equivalent ratio [NCO of (a)/OH] of at least 1.5; and
(c) reacting the product from step (b) with a hydroxy compound having a functionality of at least 1 and being different from the hydroxy compounds employed in steps (a) and (b), at a temperature of from 50°C to 120°C, until the NCO groups have disappeared.

2. Process according to claim 1, wherein the ratio of the NCO equivalents to the total OH equivalents [NCO/(total OH) equivalent ratio] in the polyurethane is not higher than 1, and preferably ranges from 0.001 to 0.9.

3. Process according to any one of claims 1 and 2, wherein the diisocyanate is selected from those of general formula (I): 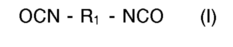 wherein
R₁ is selected from alkylene, cycloalkylene, alkylenecycloalkylene and arylene radicals containing from 1 to 20 carbon atoms.

4. Process accoring to any one of the preceding claims, wherein the hydroxy-capped (per)fluoropolyethers have an average molecular weight of from 400 to 7000 and have the general formula (II); 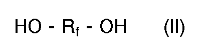 in which Rₜ is selected from
-R-CF₂-O-(C₂ F₄ O)ₘ(CF₂ 0)ₙ-C 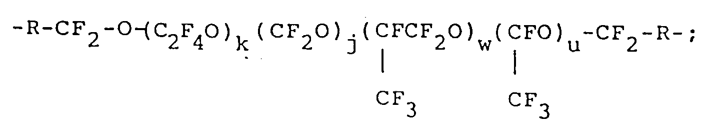
-R-CF₂-O-(C₃ F₆ O)_{d}-CF₂-R-;
-R-CF₂-(OC₂F₄CH₂)_{b}-OR'_{f} O-(CH₂C₂F₄O)_{b}-CF₂-R-;
-R-CF₂-O- (C₂F₄O)ᵣ-CF₂-R-; 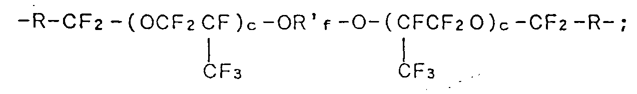 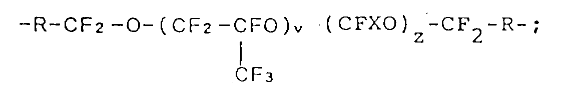 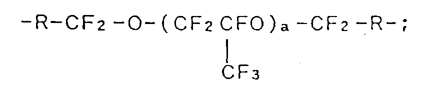 and 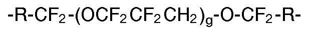 wherein:
R is selected from -CH₂)ₓ₋, -(CH₂₀)yCH₂- and -(CH₂)ₓOCH₂-, x and y being integers of from 1 to 4;
m and n are integers, the ratio m/n being comprised within the range of from 0.2 to 2;
R'ₜ is a perfluoroalkylene radical;
X is F or CF₃;
k, j, w, u, d, b, r, c, v, z, a and g are integers such that the average molecular weights of the corresponding products are within the range specified above.

5. Process according to any one of the preceding claims, wherein in the polyols which contain at least one free carboxyl group said group is bonded to a carbon atom which carries two hydroxymethyl groups.

6. Process according to any one of the preceding claims, wherein the hydroxy compound having a functionality of at least 1 has a molecular weight of less than 500.

7. Process according to any one of claims 1 to 5, wherein the hydroxy compound having a functionality of at least 1 has a molecular weight of from 500 to 6000.

8. Process according to any one of the preceding claims, wherein the polyurethane has an average molecular weight higher than 1000, a hydroxy functionality ranging from 2 to 6 and a content of free carboxyl groups of at least 1% by weight, based on the dry substance weight, and being soluble in many organic solvents and, after salification of the carboxyl group(s), also in water.

9. Water-dilutable fluorinated polyurethanes having a fluorine content higher than 30% by weight and obtainable by a process according to any one of the preceding claims which comprises:
(i) reacting an excess of at least one organic diisocyanate with at least one hydroxy-capped (per)-fluoropolyether,
(ii) reacting the thus obtained product with at least one polyol having a hydroxy functionality of at least 2 and at least one free carboxyl group; and
(iii) reacting the thus obtained prepolymer with at least one hydroxy compound having a functionality of at least 1 and being different from those used in steps (i) and (ii).

10. Use of the water-dilutable fluorinated polyurethanes according to claim 9 as protecting agents in the treatment of lithoidal materials, plasters and cements, preferably in the form of a solution having a concentration of from 1 to 20% by weight.

## Patentansprüche (Patentansprüche für folgende(n) Vertragsstaat(en) : AT, BE, CH, DE, DK, FR, GB, GR, LI, NL, SE)

1. Wasserverdünnbare fluorierte Polyurethane mit einem Fluorgehalt größer als 30 Gew.-% und erhältlich durch ein Verfahren, das umfaßt:
(i) Umsetzen eines Überschusses von wenigstens einem organischen Diisocyanat mit wenigstens einem (Per)fluorpolyether mit Hydroxyendgruppen,
(ii) Umsetzen des so erhaltenen Produkts mit wenigstens einem Polyol mit einer Hydroxyfunktionalität von wenigstens 2 und wenigstens einer freien Carboxylgruppe; und
(iii) Umsetzen des so erhaltenen Prepolymers mit wenigstens einer Hydroxyverbindung mit einer Funktionalität von wenigstens 1, die von den in den Schritten (i) und (ii) verwendeten verschieden ist.

2. Polyurethane nach Anspruch 1, worin das Verhältnis der NCO-Äquivalente zu den Gesamt-OH- Äquivalenten [NCO/(Gesamt-OH)-Äquivalentverhältnis] nicht größer als 1 ist und vorzugsweise 0,001 bis 0,9 beträgt.

3. Polyurethane nach irgendeinem der Ansprüche 1 und 2, worin das Diisocyanat ausgewählt ist aus denjenigen der allgemeinen Formel (I): 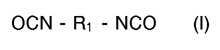 worin R₁ ausgewählt ist aus Alkylen-, Cycloalkylen-, Alkylencycloalkylen- und Arylenresten mit 1 bis 20 Kohlenstoffatomen.

4. Polyurethane nach irgendeinem der vorhergehenden Ansprüche, worin die (Per)fluorpolyether mit Hydroxyendgruppen ein mittleres Molekulargewicht von 400 bis 7000 besitzen und die allgemeine Formel (11) 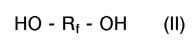 haben, in der R_{f} ausgewählt ist aus
-R-CF₂-O-(C₂F₄O)ₘ(CF₂O)ₙ-CF₂-R-; 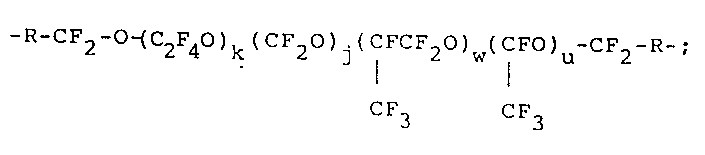
-R-CF₂-O-(C₃ F₆ O)_{d}-CF₂-R-;
-R-CF₂-(OC₂F₄CH₂)_{b}-OR'_{f} O-(CH₂C₂F₄O)_{b}-CF₂-R-;
-R-CF₂-O- (C₂F₄O)ᵣ-CF₂-R-; 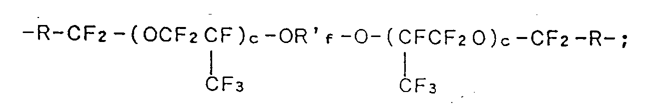 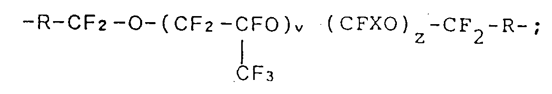 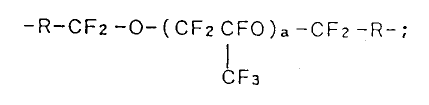 and 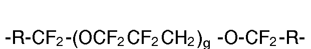 worin
R ausgewählt ist aus -(CH₂)ₓ , -(CH₂0)yCH₂- und -(CH₂)ₓOCH₂-, wobei x und y ganze Zahlen von 1 bis 4 sind;
m und n ganze Zahlen sind, wobei das Verhältnis m/n innerhalb des Bereichs von 0,2 bis 2 liegt;
R'ₜ ein Perfluoralkylenrest ist;
X F oder CF₃ ist;
k, j, w, u, d, b, r, c, v, z, a und g ganze Zahlen sind, so daß das mittlere Molekulargewicht der entsprechenden Produkte innerhalb des oben genannten Bereichs liegt.

5. Polyurethane nach irgendeinem der vorhergehenden Ansprüche, worin in den Polyolen, die wenigstens eine freie Carboxylgruppe enthalten, diese Gruppe an ein Kohlenstoffatom gebunden ist, das zwei Hydroxymethylgruppen trägt.

6. Polyurethane nach irgendeinem der vorhergehenden Ansprüche, worin die Hydroxyverbindung mit einer Funktionalität von wenigstens 1 ein Molekulargewicht niedriger als 500 hat.

7. Polyurethane nach irgendeinem der Ansprüche 1 bis 5, worin die Hydroxyverbindung mit einer Funktionalität von wenigstens 1 ein Molekulargewicht von 500 bis 6000 hat.

8. Polyurethane nach irgendeinem der vorhergehenden Ansprüche, die ein mittleres Molekulargewicht von größer als 1000, eine Hydroxyfunktionalität von 2 bis 6 und einen Gehalt an freien Carboxylgruppen von wenigstens 1 Gew.-%, bezogen auf das Trockenmassegewicht, aufweisen und in vielen organischen Lösungsmitteln und, nach Salifikation der Carboxylgruppe(n), auch in Wasser löslich sind.

9. Verfahren zur Herstellung der Polyurethane nach irgendeinem der vorhergehenden Ansprüche, das umfaßt
(a) Umsetzen des Diisocyanats und des (Per)fluorpolyethers mit Hydroxyendgruppen bei einer Temperatur von 40 bis 100°C, wobei das Äquivalentverhältnis NCO/OH auf ungefähr 3 eingestellt ist;
(b) Umsetzen des Produkts aus Schritt (a) mit dem Polyol mit einer Funktionalität von wenigstens 2 und wenigstens einer freien Carboxylgruppe bei einer Temperatur von 40 bis 120°C, bei einem Äquivalentverhältnis [NCO von (a)/OH] von wenigstens 1,5; und
(c) Umsetzen des Produkts aus Schritt (b) mit einer Hydroxyverbindung mit einer Funktionalität von wenigstens 1, die von den in den Schritten (a) und (b) verwendeten Hydroxyverbindungen verschieden ist, bei einer Temperatur von 50 °C bis 120°C, bis die NCO-Gruppen verschwunden sind.

10. Verwendung der wasserverdünnbaren fluorierten Polyurethane nach irgendeinem der Ansprüche 1 bis 8 als Schutzmittel bei der Behandlung von lithoidalen Materialien, Gipsen und Zementen, vorzugsweise in Form einer Lösung mit einer Konzentration von 1 bis 20 Gew.-%.

## Patentansprüche (Patentansprüche für folgende(n) Vertragsstaat(en) : ES)

1. Verfahren zur Herstellung wasserverdünnbarer fluorierter Polyurethane mit einem Fluorgehalt größer als 30 Gew.-%, das umfaßt:
(a) Umsetzen eines Überschusses von wenigstens einem organischen Diisocyanat mit wenigstens einem (Per)fluorpolyether mit Hydroxyendgruppen bei einer Temperatur von 40 bis 100°C, wobei das Äquivalentverhältnis NCO/OH auf ungefähr 3 eingestellt ist;
(b) Umsetzen des Produkts aus Schritt (a) mit wenigstens einem Polyol mit einer Funktionalität von wenigstens 2 und wenigstens einer freien Carboxylgruppe bei einer Temperatur von 40 bis 120°C, bei einem Äquivalentverhältnis [NCO von (a)/OH] von wenigstens 1,5; und
(c) Umsetzen des Produkts aus Schritt (b) mit einer Hydroxyverbindung mit einer Funktionalität von wenigstens 1, die von den in den Schritten (a) und (b) verwendeten Hydroxyverbindungen verschieden ist, bei einer Temperatur von 50 °C bis 120°C, bis die NCO-Gruppen verschwunden sind.

2. Verfahren nach Anspruch 1, worin das Verhältnis der NCO-Äquivalente zu den Gesamt-OH-Äquivalenten [NCO/(Gesamt-OH)-Äquivalentverhältnis] im Polyurethan nicht größer als 1 ist und vorzugsweise 0,001 bis 0,9 beträgt.

3. Verfahren nach irgendeinem der Ansprüche 1 und 2, worin das Diisocyanat ausgewählt ist aus denjenigen der allgemeinen Formel (I): 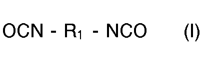 worin R₁ ausgewählt ist aus Alkylen-, Cycloalkylen-, Alkylencycloalkylen- und Arylenresten mit 1 bis 20 Kohlenstoffatomen.

4. Verfahren nach irgendeinem der vorhergehenden Ansprüche, worin die (Per)fluorpolyether mit Hydroxyendgruppen ein mittleres Molekulargewicht von 400 bis 7000 besitzen und die allgemeine Formel (II) 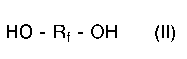 haben, in der R_{f} ausgewählt ist aus
-R-CF₂-O-(C₂F₄O)ₘ(CF₂O)ₙ-CF₂-R-; 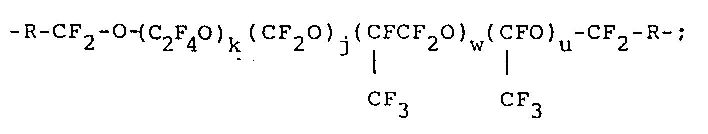
-R-CF₂-O-(C₃ F₆ O)_{d}-CF₂-R-;
-R-CF₂-(OC₂F₄CH₂)_{b}-OR'_{f} O-(CH₂C₂F₄O)_{b}-CF₂-R-;
-R-CF₂-O- (C₂F₄O)ᵣ-CF₂-R-; 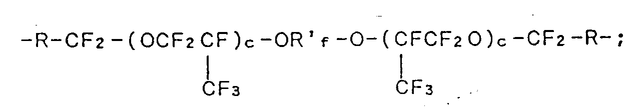 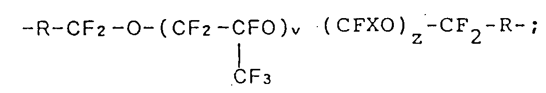 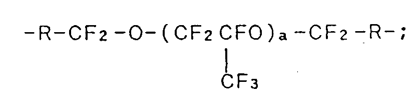 and 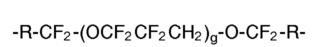 worin
R ausgewählt ist aus -(CH₂)ₓ, -(CH₂0)yCH₂- und -(CH₂)ₓOCH₂-, wobei x und y ganze Zahlen von 1 bis 4 sind;
m und n ganze Zahlen sind, wobei das Verhältnis m/n innerhalb des Bereichs von 0,2 bis 2 liegt;
R'_{f} ein Perfluoralkylenrest ist;
X F oder CF₃ ist;
k, j, w, u, d, b, r, c, v, z, a und g ganze Zahlen sind, so daß das mittlere Molekulargewicht der entsprechenden Produkte innerhalb des oben genannten Bereichs liegt.

5. Verfahren nach irgendeinem der vorhergehenden Ansprüche, worin in den Polyolen, die wenigstens eine freie Carboxylgruppe enthalten, diese Gruppe an ein Kohlenstoffatom gebunden ist, das zwei Hydroxymethylgruppen trägt.

6. Verfahren nach irgendeinem der vorhergehenden Ansprüche, worin die Hydroxyverbindung mit einer Funktionalität von wenigstens 1 ein Molekulargewicht niedriger als 500 hat.

7. Verfahren nach irgendeinem der Ansprüche 1 bis 5, worin die Hydroxyverbindung mit einer Funktionalität von wenigstens 1 ein Molekulargewicht von 500 bis 6000 hat.

8. Verfahren nach irgendeinem der vorhergehenden Ansprüche, worin das Polyurethan ein mittleres Molekulargewicht von größer als 1000, eine Hydroxyfunktionalität von 2 bis 6 und einen Gehalt an freien Carboxylgruppen von wenigstens 1 Gew.-%, bezogen auf das Trockenmassegewicht, aufweist und in vielen organischen Lösungsmitteln und, nach Salifikation der Carboxylgruppe(n), auch in Wasser löslich ist.

9. Wasserverdünnbare fluorierte Polyurethane mit einem Fluorgehalt größer als 30 Gew.-% und erhältlich durch ein Verfahren nach irgendeinem der vorhergehenden Ansprüche, das umfaßt:
(i) Umsetzen eines Überschusses von wenigstens einem organischen Diisocyanat mit wenigstens einem (Per)fluorpolyether mit Hydroxyendgruppen,
(ii) Umsetzen des so erhaltenen Produkts mit wenigstens einem Polyol mit einer Hydroxyfunktionalität von wenigstens 2 und wenigstens einer freien Carboxylgruppe; und
(iii) Umsetzen des so erhaltenen Prepolymers mit wenigstens einer Hydroxyverbindung mit einer Funktionalität von wenigstens 1, die von den in den Schritten (i) und (ii) verwendeten verschieden ist.

10. Verwendung der wasserverdünnbaren fluorierten Polyurethane nach Anspruch 9 als Schutzmittel bei der Behandlung von lithoidalen Materialien, Gipsen und Zementen, vorzugsweise in Form einer Lösung mit einer Konzentration von 1 bis 20 Gew.-%.

## Revendications (Revendications pour l'(les) Etat(s) contractant(s) suivant(s) : suivants : AT, BE, CH, DE, DK, FR, GB, GR, LI, NL, SE)

1. Polyuréthanes fluorés, pouvant être dilués dans l'eau ayant une teneur en fluor supérieure à 30% en poids et qui peuvent être obtenus par un procédé qui comprend:
(i) la réaction d'un excès d'au moins un diisocyanate organique avec au moins un (per)-fluoropolyéther à terminaison hydroxy;
(ii) la réaction du produit ainsi obtenu avec au moins un polyol ayant une fonctionnalité hydroxy d'au moins 2 et au moins un groupe carboxy libre; et
(iii) la réaction du prépolymère ainsi obtenu avec au moins un composé hydroxy ayant une fonctionnalité d'au moins 1 et étant différent de ceux qui sont utilisés dans les étapes (i) et (ii).

2. Polyuréthanes suivant la revendication 1, dans lesquels le rapport des équivalents NCO au total des équivalents OH, [rapport des équivalents NCO / (OH total)] ne dépasse pas 1 et est de préférence compris entre 0,001 et 0,9.

3. Polyuréthanes suivant les revendications 1 ou 2, dans lesquels le diisocyanate est choisi parmi les diisocyanates de formule générale (I): 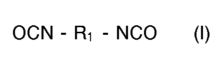 dans laquelle:
R₁ est choisi parmi des groupes alkylène, cycloalkylène, alkylène-cycloalkylène et arylène contenant de 1 à 20 atomes de carbone.

4. Polyuréthanes suivant l'une quelconque des revendications précédentes, dans lesquels les (per)-fluoropolyéthers à terminaison hydroxy ont un poids moléculaire moyen compris entre 400 et 7000 et ont la formule générale suivante (II): 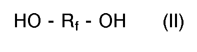 dans laquelle R_{f} est choisi parmi
-R-CF₂-O-(C₂F₄O)ₘ(CF₂O)ₙ-CF₂-R-; 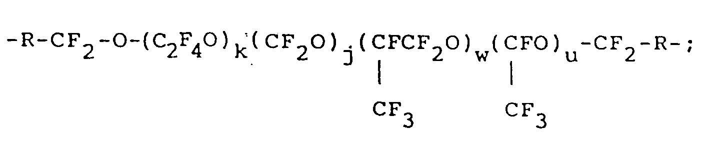
-R-CF₂-O-(C₃ F₆ O)_{d}-CF₂-R-;
-R-CF₂-(OC₂F₄CH₂)_{b}-OR'_{f} O-(CH₂C₂F₄O)_{b}-CF₂-R-;
-R-CF₂-O- (C₂F₄O)ᵣ-CF₂-R-; 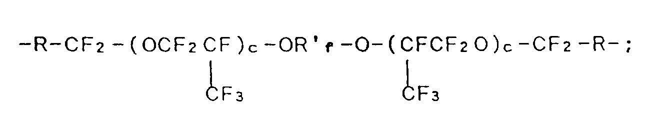 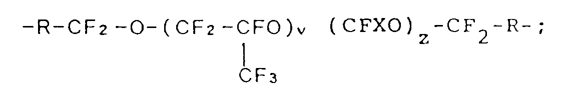 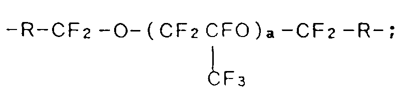 et 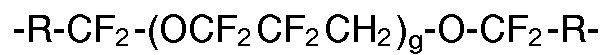 où :
R est choisi parmi
-(CH₂)ₓ, -(CH₂0)y CH₂- et -(CH₂)ₓ OCH₂-, x et y étant des entiers de 1 à 4;
m et n sont des entiers, le rapport m/n étant compris entre 0,2 et 2;
R'ₜ est un groupe perfluoroalkylène;
X est Fou CF₃;
k, j, w, u, d, b, r, c, v, z, a et g sont des entiers tels que les poids moléculaires moyens des produits correspondants se trouvent dans les limites indiquées ci-dessus.

5. Polyuréthanes suivant l'une quelconque des revendications précédentes, dans lesquels, dans les polyols qui contiennent au moins un groupe carboxy libre, ce groupe est lié à un atome de carbone qui porte deux groupes hydroxyméthyles.

6. Polyuréthanes suivant l'une quelconque des revendications précédentes, dans lesquels le composé hydroxylé, ayant une fonctionnalité d'au moins 1, a un poids moléculaire de moins de 500.

7. Polyuréthanes suivant l'une quelconque des revendications 1 à 5, dans lesquels le composé hydroxy, ayant une fonctionnalité d'au moins 1, a un poids moléculaire de 500 à 6.000.

8. Polyuréthanes suivant l'une quelconque des revendications précédentes, ayant un poids moléculaire moyen supérieur à 1.000, une fonctionnalité hydroxy comprise entre 2 et 6 et une teneur en groupes carboxy libres d'au moins 1% en poids, par rapport au poids de substance sèche, et étant solubles dans de nombreux solvants organiques, et après salification du ou des groupes carboxy, également dans l'eau.

9. Procédé de la préparation de polyuréthanes suivant l'une quelconque des revendications précédentes, comprenant:
(a) la réaction du diisocyanate organique et du (per)fluoropolyéther à terminaison hydroxy à une température comprise entre 40 °C et 100°C, le rapport des équivalents NCO/OH étant ajusté à environ 3;
(b) la réaction du produit de l'étape (a) avec le polyol ayant une fonctionnalité d'au moins 2 et portant au moins un groupe carboxy libre, à une température comprise entre 40 °C et 120°C, avec un rapport équivalent [NCO de (a) / OH] d'au moins 1,5; et
(c) la réaction du produit de l'étape (b) avec un composé hydroxylé ayant une fonctionnalité d'au moins 1 et étant différent des composés hydroxylés qui sont utilisés dans les étapes (a) et (b), à une température comprise entre 50 _{°} C et 120°C, jusqu'à disparition des groupes NCO.

10. Utilisation des polyuréthanes fluorés pouvant être dilués dans l'eau, selon l'une quelconque des revendications 1 à 8, en tant qu'agents protecteurs dans le traitement de matériaux lithoïdes, plâtres et ciments, de préférence sous la forme d'une solution ayant une concentration de 1 à 20% en poids.

## Revendications (Revendications pour l'(les) Etat(s) contractant(s) suivant(s) : ES)

1. Procédé de préparation de polyuréthanes fluorés susceptibles d'être dilués dans l'eau ayant une teneur en fluor supérieure à 30% en poids, comprenant:
(a) la réaction d'un diisocyanate organique et d'un (per)fluoropolyéther à terminaison hydroxy, à une température comprise entre 40 °C et 100°C, le rapport des équivalents NCO/OH étant ajusté à environ 3;
(b) la réaction du produit de l'étape (a) avec un polyol ayant une fonctionnalité d'au moins 2 et portant au moins un groupe carboxy libre, à une température comprise entre 40 °C et 120°C, avec un rapport équivalent [NCO de (a)/OH] d'au moins 1,5; et
(c) la réaction du produit de l'étape (b) avec un composé hydroxylé ayant une fonctionnalité d'au moins 1 et différent des composés hydroxylés qui sont utilisés dans les étapes (a) et (b), à une température comprise entre 50°C et 120°C, jusqu'à disparition des groupes NCO.

2. Procédé suivant la revendication 1, dans lequel le rapport des équivalents NCO au total des équivalents OH, [rapport des équivalents NCO/(OH total)] dans le polyuréthane ne dépasse pas 1 et est de préférence compris entre 0,001 et 0,9.

3. Procédé suivant les revendications 1 ou 2, dans lequel le diisocyanate est choisi parmi les diisocyanates de formule générale (I): 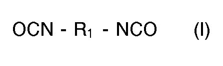 dans laquelle:
R₁ est choisi parmi les groupes alkylène, cycloalkylène, alkylène-cycloalkylène et arylène contenant de 1 à 20 atomes de carbone.

4. Procédé suivant l'une quelconque des revendications précédentes, dans lequel les (per)-fluoropolyéthers à terminaison hydroxy ont un poids moléculaire moyen compris entre 400 et 7000 et ont la formule générale suivante (II): 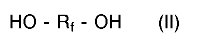 dans laquelle R_{f} est choisi parmi
-R-CF₂-O-(C₂F₄O)ₘ(CF₂ O)ₙ-CF₂-R-; 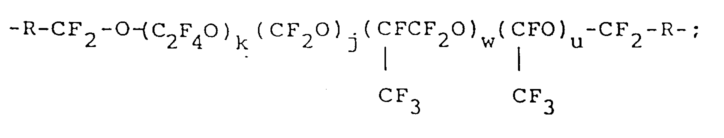
-R-CF₂ -O(C₃F₆0)_{d}-CF₂-R-;
-R-CF₂-(OC₂F₄CH₂)_{b}-OR'_{f} O-(CH₂C₂F₄O)_{b}-CF₂-R-;
-R-CF₂-O-(C₂F₄O)ᵣ-CF₂-R-; 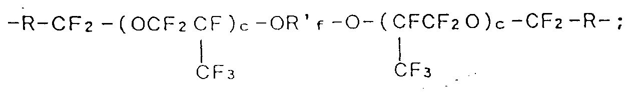 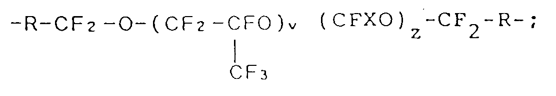 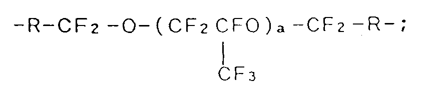 et 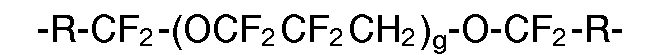 où :
R est choisi parmi
-(CH₂)ₓ-, -(CH₂0)y CH₂- et -(CH₂)ₓ OCH₂-, x et y étant des entiers de 1 à 4;
m et n sont des entiers, le rapport m/n étant compris entre 0,2 et 2;
R'ₜ est un groupe perfluoroalkylène;
X est Fou CF₃;
k, j, w, u, d, b, r, c, v, z, a et g sont des entiers tels que les poids moléculaires moyens des produits correspondants se trouvent dans les limites indiquées ci-dessus.

5. Procédé suivant l'une quelconque des revendications précédentes, dans lequel, dans les polyols qui contiennent au moins un groupe carboxy libre, ce groupe est lié à un atome de carbone qui porte deux groupes hydroxyméthyles.

6. Procédé suivant l'une quelconque des revendications précédentes, dans lequel le composé hydroxylé, ayant une fonctionnalité d'au moins 1, a un poids moléculaire inférieur à 500.

7. Procédé suivant l'une quelconque des revendications 1 à 5, dans lequel le composé hydroxy, ayant une fonctionnalité d'au moins 1, a un poids moléculaire de 500 à 6.000.

8. Procédé suivant l'une quelconque des revendications précédentes, dans lequel le polyuréthane présente un poids moléculaire moyen supérieur à 1.000, une fonctionnalité hydroxy comprise entre 2 et 6 et une teneur en groupes carboxy libres d'au moins 1% en poids, par rapport au poids de substance sèche, et est soluble dans de nombreux solvants organiques, et après salification du ou des groupes carboxy, également dans l'eau.

9. Polyuréthanes fluorés, pouvant être dilués dans l'eau ayant une teneur en fluor supérieure à 30% en poids et susceptibles d'être obtenus par un procédé selon une quelconque des revendications précédentes, qui comprend:
(i) la réaction d'un excès d'au moins un diisocyanate organique avec au moins un (per)-fluoropolyéther à terminaison hydroxy;
(ii) la réaction du produit ainsi obtenu avec au moins un polyol ayant une fonctionnalité hydroxy d'au moins 2 et au moins un groupe carboxy libre; et
(iii) la réaction du prépolymère ainsi obtenu avec au moins un composé hydroxy ayant une fonctionnalité d'au moins 1 et étant différent de ceux qui sont utilisés dans les étapes (i) et (ii).

10. Utilisation des polyuréthanes fluorés pouvant être dilués dans l'eau, selon la revendication 9, en tant qu'agents protecteurs dans le traitement de matériaux lithoïdes, plâtres et ciments, de préférence sous la forme d'une solution ayant une concentration de 1 à 20% en poids.
